# EUROPÄISCHE PATENTANMELDUNG

(11) **EP 1 870 986 A2**
(43) Veröffentlichungstag der Anmeldung: **26.12.2007**
(21) Anmeldenummer: 07106720.1
(22) Anmeldetag: 23.04.2007
(51) Int. Cl.: H02K 9/06

(54) **Elektrische Maschine**

(30) Priorität: 22.05.2006 DE 102006023999
(71) Anmelder: SIEMENS AKTIENGESELLSCHAFT, 80333 München (DE)
(72) Erfinder: Bittner, Roland, 91522, Ansbach (DE)

(57) **Zusammenfassung**

Die Erfindung betrifft eine elektrische Maschine (10) mit einem Läufer (1), einem Ständer (2) und einer Welle (3), wobei der Läufer (1) und/oder der Ständer (2) und/oder die Welle (3) eine Fläche mit einer Rillenstruktur (4) zur Ausbildung einer laminaren Luftströmung aufweist.

## Beschreibung

Die Erfindung betrifft eine elektrische Maschine mit einem Läufer, einem Ständer und einer Welle, wobei der Läufer und/oder der Ständer und/oder die Welle eine Fläche zur Ausbildung einer laminaren Luftströmung aufweist. Weiterhin betrifft die Erfindung ein Verfahren zur Herstellung einer derartigen elektrischen Maschine.

Elektrische Maschinen weisen im Wesentlichen einen Läufer, einen Ständer, ein Läuferlagersystem sowie weitere Komponenten auf. Der Läufer weist beispielsweise ein Läuferblechpaket auf, welches auf eine Stahlwelle aufgepresst ist. Weiterhin weist der Läufer eine Läuferwicklung oder Permanentmagnete zur Erzeugung eines magnetischen Feldes auf.

Bei Läufern elektrischer Maschinen treten aufgrund der Rotation Luftreibungsverluste auf. Besonders bei Werkzeugmaschinen mit Spindeln mit Schnelllaufeigenschaft, d.h. die Spindeln drehen sich mit einer Drehzahl von 20 000 U/min und mehr, treten sehr hohe Luftreibungsverluste auf. Ein höherer Luftreibungsverlust hat zudem höhere Temperaturen des Läufers zur Folge. Auch wurde bislang eine höhere Geräuschentwicklung bei Schnellläufern und schnell drehenden Wellen hingenommen. Demzufolge steigen die Anforderungen an Wirkungsgrad, Kühlung und Geräuschentwicklung derartiger schnell drehender Bauteile.

Die Aufgabe der vorliegenden Erfindung ist es, eine elektrische Maschine, insbesondere mit Schnellläufereigenschaft, derart weiterzubilden, dass diese ein verbessertes Luftströmungsverhalten aufweist.

Diese Aufgabe wird durch die Merkmale der Ansprüche 1 und 10 gelöst. Vorteilhafte Weiterbildungen sind den Unteransprüchen zu entnehmen.

Es ist bekannt, dass eine strukturierte Fläche, insbesondere eine Oberfläche, strömungsdynamisch Vorteile bietet. Beispielsweise weist eine Haifischhaut auf den Hautschuppen mikroskopisch feine, in Strömungsrichtung verlaufende, Längsrillen auf. Es zeigte sich, dass diese feinen Rillen die Entstehung störender Querströmungen verhindern und somit die Wand- bzw. Oberflächenreibung und den Strömungswiderstand verringern. Diese Querströmungen bilden sich im Bereich der der Oberfläche nächsten Schicht, d.h. der untersten wandnahen Schicht, des turbulent umströmten Körpers. Der Haifischhaut nachgebildete Oberflächen werden bereits im Flugzeugbau eingesetzt, wodurch die turbulente Wandreibung um bis zu 10% vermindert werden kann.

Erfindungsgemäß weist der Läufer und/oder der Ständer und/oder die Welle einer elektrischen Maschine eine Fläche mit einer Rillenstruktur zur Ausbildung einer laminaren Luftströmung auf.

In einer Ausführungsform der elektrischen Maschine als Innenläufermaschine wird beispielsweise der Läufer im Bereich des Luftspaltes, welcher sich zwischen Läufer und Ständer befindet, mit einer Rillenstruktur versehen. Betrachtet man den Läufer beispielsweise als Zylinder, so ist die Fläche, welche mit einer Rillenstruktur versehen ist, die Mantelfläche des Zylinders. Die Mantelfläche ist zum Ständer hin gerichtet. Diese Rillenstruktur führt zur Ausbildung einer laminaren Luftströmung unmittelbar an der untersten mantelflächennahen Schicht des Läufers und es werden sowohl Luftreibungsverluste als auch Geräuschentwicklungen reduziert. Geräuschentwicklungen entstehen insbesondere dort, wo turbulente Strömungen herrschen. Es kann bei dieser Ausführungsform sinnvoll sein, auch den Ständer mit einer Rillenstruktur zu versehen. Betrachtet man den Ständer beispielsweise als Hohlzylinder, so weist der Hohlzylinder eine innere und eine äußere Mantelfläche auf. Die Rillenstruktur ist dann an der inneren Mantelfläche angeordnet. Die Mantelfläche des Läufers und die innere Mantelfläche des Ständers begrenzen den Luftspalt zwischen Läufer und Ständer.

In einer Ausführungsform der elektrischen Maschine als Außenläufermaschine können entweder nur der Läufer oder nur der Ständer oder aber auch beide Bauteile eine Fläche mit Rillenstruktur aufweisen. Betrachtet man in diesem Fall den Läufer als Hohlzylinder, so kann an der inneren und/oder der äußeren Mantelfläche eine Rillenstruktur angeordnet sein. Ebenso kann der Ständer, welchen man in diesem Fall zylindrisch betrachten kann, an seiner Mantelfläche eine Rillenstruktur aufweisen.

In einer weiteren Ausführungsform der elektrischen Maschine kann auch die Welle eine oder mehrere Flächen mit Rillenstruktur aufweisen, wobei die elektrische Maschine als Innenläufer- oder Außenläufermaschine ausgebildet sein kann. Die Rillenstruktur befindet sich dann an der Mantelfläche, d.h. der Umfangsfläche der Welle.

Vorzugsweise besteht die Rillenstruktur aus mehreren Rillen, welche als längliche Vertiefungen ausgebildet sind, die umlaufend um den Läufer und/oder den Ständer und/oder die Welle angeordnet sind. Die Rillen können dabei ringartig ausgebildet sein, d.h. die Rillenstruktur umfasst mehrere einzelne Ringe, die umlaufend angeordnet sind. Alternativ können die Rillen auch schraubenartig ausgebildet sein. Die Rillenstruktur weist dann eine oder mehrere schraubenartig um den Läufer und/oder den Ständer und/oder die Welle angeordnete Rillen auf.

Die Anzahl der Rillen, ebenso wie die Breite der Rillen, ist entsprechend der Größe des Bauteils und der Dicke der wandnahen Schicht des turbulent umströmten Körpers zu dimensionieren. Die Rillen sind i.d.R. sehr klein, beispielsweise im µm-Bereich, und die Anzahl der Rillen sehr hoch.

Die Reynolds-Zahl Re stellt das Verhältnis von Trägheits- zu Zähigkeitskräften für ein strömendes Medium, wie Luft, in einem bestimmten Anwendungsfall dar. Weiterhin gibt es für verschiedene Medien in verschiedenen Anwendungsfällen eine kritische Reynolds-Zahl Reₖᵣᵢₜ. Dieser kritische Wert Reₖᵣᵢₜ beziffert einen Grenzwert zwischen laminarem und turbulentem Strömungsverhalten. Überschreitet die Reynolds-Zahl Re den kritischen Wert Reₖᵣᵢₜ, so schlägt eine laminare in eine turbulente Strömung um.

Vorzugsweise sind die Rillen im Wesentlichen parallel zur Hauptströmungsrichtung der Luftströmung am Läufer und/oder Ständer und/oder Welle ausgerichtet. Die Luftströmung ist zum einen diejenige Luftströmung die sich zwischen Läufer und Ständer im Luftspalt befindet. Zum anderen kann es bei Außenläufermaschinen diejenige Luftströmung sein, die sich am äußeren Mantel des Läufers befindet. Durch diese Anordnung der Rillen werden Luftreibungsverluste und Geräuschentwicklungen am besten minimiert, was insbesondere bei Schnellläufern gewünscht ist.

Die Hauptströmungsrichtung des Luftstroms hängt u.a. von der Geschwindigkeit des Läufers und den Druckverhältnissen der Luft ab. Sind beispielsweise Kühlerlüfter an den Stirnseiten des Läufers vorhanden, wird sich eine andere Hauptströmungsrichtung der Luft, die in diesem Fall als Kühlluft fungiert, einstellen als bei nicht Vorhandensein von zusätzlichen Kühlerlüftern. Die Hauptströmungsrichtung kann parallel zur Rotationsrichtung des Läufers der elektrischen Maschine verlaufen. In diesem Fall sind die Rillen parallel zur Rotationsrichtung des Läufers der elektrischen Maschine ausgebildet.

Es kann aber auch von Vorteil sein, die Rillen nicht in Hauptströmungsrichtung der Luftströmung oder Rotationsrichtung des Läufers, sondern in einem bestimmten Winkel zur Hauptströmungsrichtung oder Rotationsrichtung auszurichten. Dieser Winkel hat beispielsweise einen Wert zwischen 5° und 45° zur Hauptströmung der Luftströmung oder zur Rotationsrichtung des Läufers. Aufgrund dieser Ausrichtung der Rillen wird beispielsweise der Luftspalt zwischen Läufer und Ständer besser von Kühlluft durchströmt. Somit kann die Orientierung der Rillenstruktur an die Erfordernisse der elektrischen Maschine angepasst werden. Vorteilhaft ist es auch, eine Orientierung zu wählen, bei welcher für verschiedene Ziele, wie beispielsweise minimale Luftreibungsverluste oder bessere Durchströmung von Kühlluft, ein Gesamtoptimum erreichbar ist. Es könnten dann beispielsweise ein Teil der Rillen parallel zur Rotationsrichtung und ein anderer Teil der Rillen nicht parallel zur Rotationsrichtung angeordnet sein.

Vorzugsweise weisen die Rillen in ihrem Querschnitt eine Form auf, die dreieckig, viereckig oder halbkreisförmig ist. Rillen mit diesen Formen sind einfach zu realisieren, beispielsweise durch eine Oberflächenbehandlung des entsprechenden Bauteils mit einem Laser.

Die Rillen können auch durch hintereinander liegende Rippen gebildet sein. Die Rippen sind einzelne Elemente, die hintereinander angeordnet, eine Rippenreihe ergeben. Zwischen zwei gegenüberliegenden Rippenreihen bildet sich dann eine Rille. Anstatt von Rippen können auch schuppenartige Elemente zur Bildung von Rillen angeordnet sein.

Vorzugsweise ist die Rillenstruktur mittels einer Folie ausgebildet. Beispielsweise kann die Folie durch folgende Methoden, welche auch kombinierbar sind, auf dem Läufer und/oder dem Ständer und/oder der Welle positioniert werden:
- Aufkleben der Folie,
- Bewickeln des Bauteils mit der Folie,
- Aufschrumpfen eines Folienschlauches, und
- Aufsetzen eines Folienschlauches durch einen Evakuierungsvorgang.

Besonders vorteilhaft ist eine Kombination der Verfahren des Aufklebens und anschließenden Aufschrumpfens eines Folienschlauches und eine Kombination der Verfahren des Aufklebens mit anschließendem Evakuieren eines Folienschlauches.

Das Aufschrumpfen ist eine Montagemethode, die darauf beruht, dass bestimmte Materialien sich durch Erhitzen irreversibel verkleinern. Ein Folienschlauch aus einem derartigen Material, auch Schrumpfschlauch genannt, schrumpft durch das Erhitzen irreversibel und lässt sich somit sehr eng um einen Gegenstand ziehen.

Die Verfahrenskombination des Aufklebens und anschließenden Aufschrumpfens eines Folienschlauches weist folgende Schritte auf:
- Herstellen des Läufers, des Ständers und der Welle,
- Aufbringen eines Klebemittels auf die zu strukturierende Fläche des Läufers und/oder des Ständers und/oder der Welle zur Ausbildung einer Klebeschicht,
- Anordnen des Folienschlauches um den Läufer und/oder den Ständer und/oder die Welle,
- Erhitzen des Folienschlauches, wobei der Folienschlauch irreversibel schrumpft und eng am Läufer und/oder Ständer und/oder der Welle anliegt.

Die Verfahrenskombination des Aufklebens mit anschließendem Evakuieren eines Folienschlauches weist folgende Schritte auf:
- Herstellen des Läufers, des Ständers und der Welle,
- Aufbringen eines Klebemittels auf die zu strukturierende Fläche des Läufers und/oder des Ständers und/oder der Welle zur Ausbildung einer Klebeschicht,
- Anordnen des Folienschlauches um den Läufer und/oder den Ständer und/oder die Welle,
- Evakuieren der Luft, die sich zwischen Folienschlauch und derjenigen Fläche befindet, auf die der Folienschlauch aufgebracht werden soll.

Beim Evakuierungsvorgang wird eine Art Vakuum herbeigeführt, wodurch ein Unterdruck gegenüber der restlichen Umgebungsluft entsteht. Aufgrund dieses Druckunterschiedes haftet die Folie bzw. der Folienschlauch an der Fläche, wonach sie bzw. er dort anschließend vorteilhaft durch ein Klebemittel gehalten wird.

In einer weiteren Ausgestaltung kann die Rillenstruktur mittels einer Bandage ausgebildet sein. Gerade bei Schnellläufern ist es notwendig, den Läufer mit einer Bandage zu versehen, um insbesondere am Läufer angeordnete Permanentmagnete entgegen den Zentrifugalkräften mit dem Läufer zusammenzuhalten. Vorteilhafterweise ist die Bandage derart ausgebildet, dass sie sowohl zur Ausübung einer Zentripetalkraft dient als auch eine Rillenstruktur auf der dem Luftspalt zugewandten Seite aufweist.

In einer weiteren Ausgestaltung ist die Rillenstruktur mittels einer Oberflächenbehandlung, insbesondere eines Oberflächenabtrags mittels Laser, oder durch ein Gießverfahren ausgebildet. Da u.U. Teile einer elektrischen Maschine, die an den Luftspalt grenzen, vergossen sind, ist es daher möglich, auf eine Folie zu verzichten und die Gießform derart auszugestalten, dass sich durch den Verguss die Rillenstruktur ausbildet. Auch ist zur Ausbildung der Oberflächenstruktur beispielsweise eine Laserbearbeitung der Oberfläche möglich, insbesondere dann, wenn eine Welle mit einer Rillenstruktur versehen werden soll.

Vorteilhafterweise ist die Rillenstruktur derart ausgebildet, dass deren Oberfläche schmutzabweisend ist. Solch eine schmutzabweisende Eigenschaft ist als so genannter Lotus-Effekt bekannt. Die Ursache des Effekts liegt in der besonderen Oberflächenstruktur, wobei die Oberfläche beispielsweise Noppen im Mikrometerbereich aufweist. Durch diese "Mikrorauhigkeit" in elektronenmikroskopischer Dimension ist die Kontaktfläche zu Schmutzpartikeln geringer. Eine solche schmutzabweisende Rillenstruktur hat beispielsweise den Vorteil, dass sich Schmutzteilchen in der Kühlluft, welche durch den Luftspalt geblasen wird, schlechter am Läufer und/oder Ständer anhaften.

Die elektrische Maschine kann beispielsweise als Innenläufermaschine oder Außenläufermaschine, insbesondere mit Schnellläufer, ausgebildet sein.

Eine erfindungsgemäße elektrische Maschine ist besonders für Werkzeugmaschinen mit Spindeln mit Schnelllaufeigenschaft geeignet.

Ein weiteres Anwendungsgebiet ist der Einsatz solcher elektrischer Maschinen in einer Funktion als elektrischer Generator, beispielsweise in einem Kraftwerk. Dort sind bereits kleinste Verbesserungen der Energieeffizienz von großer wirtschaftlicher Bedeutung. Gerade auch eine Rillenstruktur auf der Welle eines Generators eines Kraftwerks zur Erzeugung elektrischer Energie ist zur Erzielung zumindest eines der nachfolgend beschriebenen Vorteile geeignet, wobei dies den Einsatz bei einem Ständer bzw. Läufer des Generators nicht ausschließt.

Weitere vorteilhafte Anwendungen derartiger elektrischer Maschinen sind natürlich nicht ausgeschlossen.

Durch die Verbesserung der Luftströmung können folgende Vorteile erzielt werden:
- verbesserte Laufruhe, d.h. es treten weniger Vibrationen der elektrischen Maschine auf, wodurch sich auch ein verbessertes Regelungsverhalten einstellt,
- verbesserte Kühlung, da Kühlluft weniger verwirbelt wird und der Luftdurchsatz erhöht werden kann,
- eine reduzierte Geräuschentwicklung, wodurch auch die Arbeitssicherheit verbessert wird, und
- erhöhter Wirkungsgrad.

In der nachfolgenden Beschreibung wird die Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine schematische Darstellung eines Läufers mit Rillenstruktur gemäß einem ersten Ausführung;
- FIG 2: eine schematische Darstellung eines Läufers mit Rillenstruktur gemäß einem zweiten Ausführung;
- FIG 3: eine schematische Darstellung eines Läufers mit Rillenstruktur gemäß einem dritten Ausführung;
- FIG 4: eine schematische Darstellung einer Rillenstruktur gemäß einem ersten Ausführung;
- FIG 5: eine schematische Darstellung einer Rillenstruktur gemäß einem zweiten Ausführung;
- FIG 6: eine schematische Darstellung einer Rillenstruktur gemäß einer dritten Ausführung.

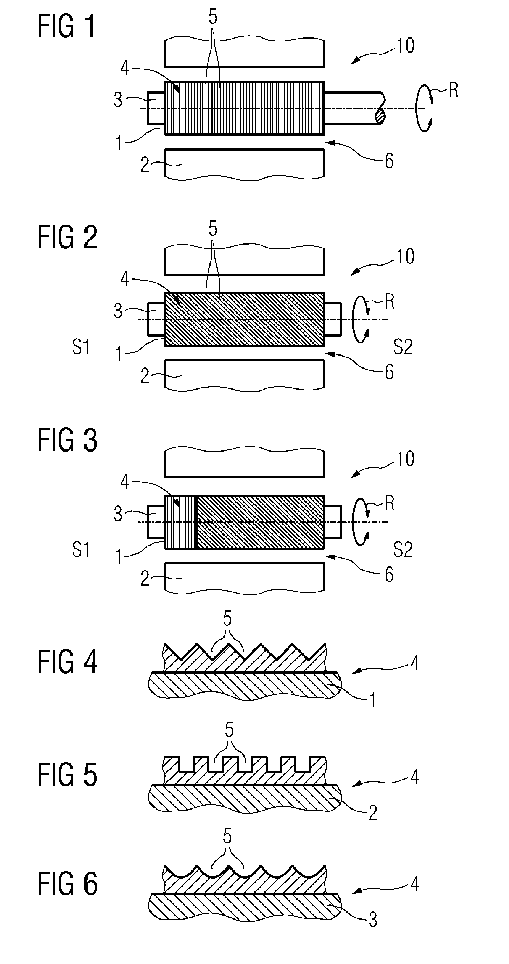

FIG 1 zeigt eine schematische Darstellung eines Läufers 1 mit der Rillenstruktur 4. Eine elektrische Maschine 10 ist als Innenläufermaschine mit dem Läufer 1 und dem Ständer 2 ausgebildet. Der Läufer 1 ist auf der Welle 3 angeordnet. Der Läufer ist im Bereich des Luftspaltes 6, welcher sich zwischen Läufer 1 und Ständer 2 befindet, mit der Rillenstruktur 4 versehen. Die Rillenstruktur 4 weist eine Vielzahl von Rillen 5 auf, die parallel zur Rotationsrichtung R des Läufers 1 angeordnet sind. Die Rillenstruktur 4 führt zur Ausbildung einer laminaren Luftströmung unmittelbar an der untersten wandnahen Luftschicht des Läufers 1 und es werden sowohl Luftreibungsverluste als auch Geräuschentwicklungen reduziert.

In FIG 2 ist gezeigt, dass die Rillen 5 der Rillenstruktur 4 in einem Winkel von ca. 45° zur Rotationsrichtung R angeordnet sind. Aufgrund dieser Ausrichtung der Rillen 5 wird der Luftspalt 6 besser von Kühlluft durchströmt. Durch die schräge Anordnung der Rillen 5 wird eine Art Pumpwirkung erzeugt, d.h. die Luft wird durch den Luftspalt 6 von der Seite S1 zur Seite S2 gesaugt.

FIG 3 zeigt einen Läufer 1 mit Rillenstruktur 4, wobei die Rillen 5 sowohl parallel als auch in einem Winkel von ca. 45° zur Rotationsrichtung R des Läufers 1 angeordnet sind. Durch diese Kombination der verschiedenen Anordnungen der Rillen 5, wird einerseits die Luftreibung minimiert und andererseits ein Kühlluftstrom im Luftspalt 6 zur Kühlung der elektrischen Maschine 10 erzeugt. Durch die schräge Anordnung der Rillen 5 wird eine Art Pumpwirkung erzeugt, d. h. die Luft wird durch den Luftspalt 6 von der Seite S1 zur Seite S2 gesaugt.

FIG 4, FIG 5 und FIG 6 zeigen schematische Darstellungen von Rillenstrukturen 4. Gemäß FIG 4 weisen die Rillen 5 im Querschnitt eine dreieckige Form auf. Nach FIG 5 sind die Rillen 5 viereckförmig und nach FIG 6 zeigt halbkreisförmig ausgebildet. Derartige Rillenformen sind, insbesondere bei Folien, einfach zu realisieren. Die Rillenstrukturen 4 gemäß den FIG 4 bis 6 sind beispielhaft in FIG 4 am Läufer 1, in FIG 5 am Ständer 2 und in FIG 6 an der Welle 3 angeordnet, wobei die verschiedenen Rillenstrukturen 4 beliebig am Läufer, Ständer und an der Welle angeordnet sein können.

## Patentansprüche

**1.** Elektrische Maschine (10) mit einem Läufer (1), einem Ständer (2) und einer Welle (3), wobei der Läufer (1) und/oder der Ständer (2) und/oder die Welle (3) eine Fläche mit einer Rillenstruktur (4) zur Ausbildung einer laminaren Luftströmung aufweist.

**2.** Elektrische Maschine (10) nach Anspruch 1, wobei die Rillenstruktur (4) mehrere Rillen (5) aufweist, welche umlaufend um den Läufer (1) und/oder den Ständer (2) und/oder die Welle (3) angeordnet sind.

**3.** Elektrische Maschine (10) nach Anspruch 1 oder 2, wobei die Rillen (5) parallel zur Hauptströmungsrichtung der Luftströmung am Läufer (1) und/oder Ständer (2) und/oder Welle (3) ausgebildet sind.

**4.** Elektrische Maschine (10) nach einem der Ansprüche 1 bis 3, wobei die Rillen (5) in ihrem Querschnitt dreieckförmig, viereckförmig oder halbkreisförmig ausgebildet sind.

**5.** Elektrische Maschine (10) nach einem der Ansprüche 1 bis 4, wobei die Rillenstruktur (4) mittels einer Folie, insbesondere eines Folienschlauches, ausgebildet ist.

**6.** Elektrische Maschine (10) nach einem der Ansprüche 1 bis 5, wobei die Rillenstruktur (4) mittels einer Bandage ausgebildet ist.

**7.** Elektrische Maschine (10) nach einem der Ansprüche 1 bis 6, wobei die Rillenstruktur (4) mittels einer Oberflächenbehandlung, insbesondere eines Oberflächenabtrags mittels Laser, oder durch ein Gießverfahren ausgebildet ist.

**8.** Elektrische Maschine (10) nach einem der Ansprüche 1 bis 7, wobei die Oberfläche der Rillenstruktur (4) schmutzabweisend ist.

**9.** Verfahren zur Herstellung einer elektrischen Maschine (10) nach einem oder mehreren der Ansprüche 1 bis 8, wobei das Verfahren folgende Schritte aufweist:
- Aufbringen eines Klebemittels auf die zu strukturierende Fläche des Läufers (1) und/oder des Ständers (2) und/oder der Welle (3) zur Ausbildung einer Klebeschicht,
- Anordnen des Folienschlauches um den Läufer (1) und/oder den Ständer (2) und/oder die Welle (3),
- Erhitzen des Folienschlauches, wobei der Folienschlauch schrumpft und am Läufer (1) und/oder Ständer (2) und/oder der Welle (3) anliegt.
